# EUROPÄISCHE PATENTANMELDUNG

(11) **EP 2 248 772 A1**
(43) Veröffentlichungstag der Anmeldung: **10.11.2010**
(21) Anmeldenummer: 10003961.9
(22) Anmeldetag: 15.04.2010
(51) Int. Cl.: C03B 3/00, C03B 3/02

(54) **Vorrichtung zum Vorwärmen von Glasscherbengemengen**

(30) Priorität: 04.05.2009 DE 102009019454
(71) Anmelder: Ardagh Glass GmbH, 31582 Nienburg (DE)
(72) Erfinder: Barklage, Hansjürgen, 31582 Nienburg (DE); Cieleback, Wolfgang, 31582 Nienburg (DE); Schaper, Rolf, 23812 Wahlstedt (DE)
(74) Vertreter: Aulich, Martin

(57) **Zusammenfassung**

Die Erfindung betrifft eine Vorrichtung zum Vorwärmen eines vorzugsweise mit Rohstoffen, zur Glasherstellung angereicherten Glasscherbengemenges (12) mit einem vorzugsweise Strömungskanäle zum Durchleiten von warmem (Ab-)Gas aufweisenden Bunker (14). Die Erfindung ist **dadurch gekennzeichnet, dass** die Vorrichtung zur Austragung des vorgewärmten Glasscherbengemenge aus dem Bunker über eine ein oder mehrere Austragsschnecken (26) verfügt, mit der das Glasscherbengemenge mindestens einer Ausflussöffnung (28) im Bodenbereich des Bunkers (14) zuförderbar ist

## Beschreibung

Die vorliegende Erfindung betrifft eine Vorrichtung zum Vorwärmen eines vorzugsweise mit Rohstoffen zur Glasherstellung angereicherten Glasscherbengemenges mit einem vorzugsweise Strömungskanäle zum Durchleiten von warmem (Ab-)Gas aufweisenden Bunker.

Eine derartige Vorrichtung ist beispielsweise bekannt aus der DE 34 16 317 C2. Sie dient dazu, während des GlashersteNungsprozesses die Wärmeenergie der bei der Verbrennung der Rohstoffe im Schmelzofen entstehenden Abgase zur Vorwärmung des Glasscherbengemenges zu nutzen. Zu diesem Zweck werden die Abgase - ggf. indem sie zuvor nach Durchleitung durch einen Wärmetauscher die zum Schmelzvorgang notwendige Verbrennungsluft vorgewärmt haben - in der Regel entlang von Strömungskanälen durch den Bunker geführt, nämlich durch das Glasscherbengemenge hindurch. Innerhalb des Bunkers wird die Wärmeenergie des Abgases mindestens teilweise auf das Glasscherbengemenge übertragen. Die Vorwärmung des Glasscherbengemenges führt letztlich zu einer Reduktion der bei dem nachfolgenden Schmelzvorgang im Schmelzofen benötigten Wärmeenergie.

Nach Durchfluss des Glasscherbengemenges durch den Bunker wird dieses aus der Vorwärmervorrichtung ausgetragen und dem eigentlichen Schmelzofen zugeführt. Die Austragung des vorgewärmten Glasscherbengemenges aus dem Vorwärmer ist allerdings problematisch.

Dies gilt insbesondere dann, wenn das Glasscherbengemenge einem eine sogenannte U-Flammenwanne aufweisenden Schmelzofen zugeführt werden soll. Denn das Doghouse der U-Flammenwanne - der Einlegevorbau der Schmelzwanne zum Einlegen des Glasscherbengemenges - hat konstruktionsbedingt vergleichsweise geringe Abmessungen. In das Doghouse der U-Flammenwanne kann daher in der Regel nur eine einzelne Rutsche einer Einlegemaschine münden, die das dem aus der Vorwärmervorrichtung stammende Glasscherbengemenge in das Doghouse fördert.

Um mittels nur einer Rutsche einen kontinuierlichen Materialfluss zu erzeugen, muss die Materialaustragsleistung des Vorwärmers entsprechend groß und beständig sein. Im Stand der Technik ist es bekannt, zu diesem Zweck im Bodenbereich des Vorwärmers sogenannte Schwingböden einzusetzen. Diese führen Oszillationen durch und sorgen für einen möglichst gleichmäßigen Materialaustrag aus der Vorwärmervorrichtung bzw. eine möglichst große Materialaustragsleistung desselben. Die Trichter münden dabei in die Rutsche der Einlegemaschine, die wiederum in das Doghouse mündet.

Nachteilig bei dieser Lösung des Standes der Technik ist, dass trotz der Oszillationen der Schwingböden häufig Verbackungen des warmen Glasscherbengemenges auftreten. Entsprechend verstopfen die Trichter. In letzter Konsequenz stoppt der Materialaustrag fehlerhafterweise.

Ausgehend hiervon ist es Aufgabe der vorliegenden Erfindung, die eingangs genannte Vorwärmervorrichtung dahingehend zu verbessern, dass der Austrag des Glasscherbengemenges nach Durchlaufen bzw. Durchfließen derselben möglichst fehlerfrei mit großen Materialaustragsleistungen erfolgen kann. Insbesondere soll ein Verbacken des warmen Glasscherbengemenges möglichst verhindert werden.

Diese Aufgabe wird gelöst durch eine Vorrichtung der eingangs genannten Art mit den Merkmalen des Anspruchs 1.

Danach verfügt die Vorrichtung zur Austragung des vorgewärmten Glasscherbengemenges aus dem Bunker über eine ein oder mehrere Austragsschnecken, mit der das Glasscherbengemenge mindestens einer Ausflussöffnung im Bodenbereich des Bunkers zuförderbar ist.

Es hat sich gezeigt, dass die erfindungsgemäße Lösung die vorher bestehenden Probleme, einen ausreichenden Materialaustrag aus dem Vorwärmer zu gewährleisten, in optimaler Weise löst. Insbesondere kann durch die Austragsschnecken ein Verbacken des Glasscherbengemenges verhindert werden.

Vorzugsweise ist erfindungsgemäß eine Mehrzahl von Austragsschnecken vorgesehen, die jeweils oberhalb oder auf der Bodenwandung des Bunkers angeordnet sind. Die Austragsschnecken verlaufen dabei insbesondere parallel zueinander und fördern das Glasscherbengemenge der mindestens einen Ausflussöffnung zu. Zweckmäßigerweise wirken sämtliche der Austragsschnecken in die gleiche Richtung. Dabei ist bevorzugt im Wesentlichen die komplette Bodenwandung des Bunkers von den Austragsschnecken überdeckt, sodass im Wesentlichen das gesamte, von oben in Richtung der Bodenwandung fließende Glasscherbengemenge der mindestens einen Ausflussöffnung zugefördert wird.

In der Regel wird die mindestens eine Ausflußöffnung unmittelbar innerhalb der Bodenwandung des Bunkers angeordnet bzw. dort eingelassen sein. Bevorzugt ist sie im Bereich der Stirnseiten der parallel angeordneten Austragsschnecken angeordnet.

In weiterer Ausbildung der Erfindung ist die Ausflussöffnung länglich ausgebildet. Sie erstreckt sich dabei entlang mehrerer oder sämtlicher Austragsschnecken quer zu deren Wirkrichtung, und zwar unterhalb derselben, insbesondere entlang deren Stirnseiten.

Vorteilhafterweise sind die Austragsschnecken oberhalb oder auf der in der Regel im Wesentlichen rechteckigen Bodenwandung derart angeordnet, dass deren Wirkrichtung quer zur Längserstreckung der Bodenwandung verläuft. In diesem Fall verläuft die mindestens eine, vorteilhafterweise streifenförmig ausgebildete Ausflussöffnung in Längsrichtung der Bodenwandung. Die Austragsschnecken fördern in diesem Fall das Glasscherbengemenge in Richtung dieser Längsöffnung.

Aus der mindestens einen Ausflussöffnung könnte das Glasscherbengemenge anschließend direkt einer Einlegemaschine zum Einlegen des Gemenges in ein Doghouse einer Schmelzwanne zugeführt werden.

Gemäß einer weiteren bevorzugten Ausführungsform der Erfindung ist allerdings vorgesehen, unterhalb der mindestens einen, in der Bodenwandung angeordneten

Ausflussöffnung mindestens eine Förderschnecken anzuordnen, die winklig, insbesondere senkrecht bzw. quer zu den oberhalb der Bodenwandung des Bunkers angeordneten Austragsschnecken wirkt. Das aus der Ausflussöffnung nach unten fließende Material wird dabei mit anderen Worten von der oder den Förderschnecken in eine Richtung winklig bzw. quer zu der Wirkrichtung der Austragsschnecken weitergefördert.

Vorzugsweise ist die mindestens eine Förderschnecke unmittelbar unterhalb der Ausflussöffnung angeordnet. Das Material fließt daher unmittelbar durch die insbesondere streifenartige Ausflussöffnung nach unten und trifft dort auf die mindestens eine, winklig wirkende Förderschnecke.

Letztere fördert schließlich in einer weiteren Ausbildung der Erfindung das in der Regel in einem breiten Materialfluss fließende Gemenge einem oder mehreren, insbesondere im Bereich der Stirnseite der Förderschnecke angeordneten, schräg oder senkrecht nach unten verlaufenden Förderkanälen zu. Diese Förderkanäle münden im Anschluss bevorzugt in den Bereich der vorgenannten Einlegemaschine, die das Glasscherbengemenge dem Doghouse der Brennerwanne zufördert.

Vorzugsweise endet der mindestens eine Förderkanal oberhalb einer oberen Trichteröffnung eines Trichters der Einlegemaschine oder auch innerhalb der oberen Trichteröffnung.

Weitere Merkmale der vorliegenden Erfindung ergeben sich aus den beigefügten Patentansprüchen, der nachfolgenden Beschreibung eines bevorzugten Ausführungsbeispiels sowie aus der beigefügten Zeichnung.

Darin zeigt:

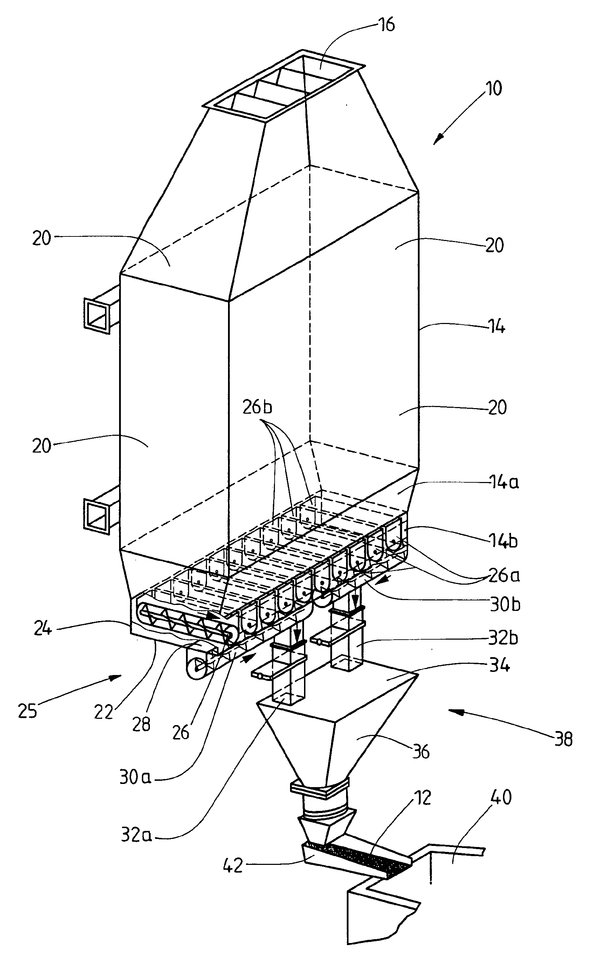

- Fig. 1: eine erfindungsgemäße Vorrichtung zum Vorwärmen von Glasscherbengemengen in Schrägansicht, teilweise geschnitten.

Fig. 1 zeigt eine erfindungsgemäße Vorrichtung 10 zum Vorwärmen eines Glasscherbengemenges 12 mit einem Bunker 14. Dem Bunker 14 wird das vorzuwärmende Glasscherbengemenge 12 durch eine obere Öffnung 16 in nicht dargestellter Weise zugeführt. Die für die Zuführung notwendigen Maßnahmen sind im Stand der Technik bekannt.

Im Bunker 14 entsteht - zumindest bei kontinuierlicher Beschickung mit dem Glasscherbengemenge 12 - in der Regel ein annähernd kontinuierlicher Fluss des Glasscherbengemenges 12 von oben nach unten. Dabei wird das Glasscherbengemenge 12 auf seinem Weg durch den Bunker 14 erwärmt. Zur Vorwärmung des Glasscherbengemenges 12 innerhalb des Bunkers 14 werden letzterem heiße Abgase zugeführt, die während eines Schmelzvorgangs in einem nicht gezeigten Glasschmelzofen entstanden sind.

Innerhalb des Hauptteils des Bunkers 14, der im vorliegenden Fall im rechteckig ist und durch aufrechte Seitenwände 20 gebildet ist, befindet sich eine Vielzahl von der Einfachheit halber nicht dargestellten, horizontal verlaufenden Strömungskanälen. Die übereinander angeordneten Strömungskanäle sind jeweils untereinander verbunden und derart innerhalb des Bunkers 14 positioniert, dass im unteren Bereich des Bunkers 14 das warme Abgas zugeführt und innerhalb des Bunkers 14 im Kreuzgegenstrom nach oben geführt werden kann. Nach Art eines Wärmetauschers wird dabei das Glasscherbengemenge 12 von dem vorbeiströmenden, warmen oder heißen Abgas erwärmt. Weitere Einzelheiten der Funktionsweise einer derartigen Vorwärmvorrichtung sind beispielsweise der DE 3416 317 C2 entnehmbar, deren Inhalt hiermit in die vorliegende Anmeldung integriert wird.

Nach Durchlauf des Glasscherbengemenges 12 durch den Bunker 14 muss das vorgewärmte Glasscherbengemenge aus diesem ausgetragen werden.

Zu diesem Zweck verengt sich der Bunker 14 nach unten hin und weist im unteren Bereich einen trichterförmigen Bereich 14a auf. An den trichterförmigen Bereich 14a des Bunkers 14 schließt sich eine Bunkerbodenwanne 14b an mit rechteckigem Querschnitt, aufrechten Seitenwandungen 24 sowie einer, den Bunker 14 bzw. die Bodenwanne 14b nach unten abschließenden Bodenwandung 22.

Quer zu der Längserstreckung der Bodenwanne 14b sind in dieser im vorliegenden Beispiel zehn Austragsschnecken 26 angeordnet. Diese überdecken im Wesentlichen die gesamte, rechteckige Bodenwandung 22 und grenzen mit ihren jeweiligen Stirnseiten 26a, 26b jeweils an die aufrechten Seitenwänden 24 der Bodenwanne 14b an. Die zehn Austragsschnecken 26 sind parallel zueinander angeordnet, sodass deren Wirkrichtungen ebenfalls parallel verlaufen. Die quer zu der Bodenwandung 22 verlaufenden Wirkrichtungen der Austragsschnecken 26 in der Bodenwanne 14b sind exemplarisch durch einen entsprechenden Pfeil in der Fig. 1 dargestellt.

Das vorgewärmte Glasscherbengemenge 12 fließt in der Regel kontinuierlich von oben auf die Austragsschnecken 26 und wird in Wirkrichtung der jeweiligen Austragsschnecken 26 in Richtung der in Fig. 1 vorderen Längsseitenwand der Bodenwanne 14b gefördert. In der Bodenwandung 22 ist im Bereich der an die vordere Längsseitenwand angrenzenden Stirnseiten 26a der Austragsschnecken 26 eine quer zu den Wirkrichtungen der Schnecken 26 sowie bezogen auf die Bodenwandung 22 in Längsrichtung verlaufende, streifenartige Ausflussöffnung 28 bzw. Ausflussausnehmung 28 angeordnet.

Das durch die Schnecken 26 jeweils in Richtung dieser in Längsrichtung verlaufenden Ausflussöffnung 28 geförderte Glasscherbengemenge 12 fließt durch diese hindurch nach unten aus der Bodenwanne 14b heraus.

Unmittelbar unterhalb der streifenförmigen Ausflussöffnung 28 sind parallel zu der Längserstreckung derselben und somit quer zu den Wirkrichtungen der Austragsschnecken 26 zwei miteinander fluchtende, weitere Förderschnecken 30a und 30b angeordnet. Diese fördern das Glasscherbengemenge 12 jeweils in entgegengesetzte Richtung, und zwar hin zu oberen Einlassöffnungen von vertikal nach unten verlaufenden Förderkanälen 32a, 32b. Diese oberen Einlassöffnungen der Förderkanäle 32a, 32b sind im Bereich der Stirnseiten der Schnecken 30a, 30b unmittelbar unterhalb derselben angeordnet.

Die Förderkanäle 32a, 32b verfügen über einen quadratischen Querschnitt und münden jeweils in die obere Öffnung 34 eines Trichters 36 einer sogenannten Einlegemaschine 38.

Die Einlegemaschine 38 sorgt im weiteren Verlauf dafür, dass das Glasscherbengemenge 12 dem Doghouse 40 einer U-Flammenwanne des nicht gezeigten Glasschmelzofens zugefördert wird. Hierzu fließt das Glasscherbengemenge nach Durchfließen des Trichters 36 zu einer Rüttelrutsche 42 der Einlegemaschine 38, die wiederum unmittelbar in dem Doghouse 40 mündet.

### Bezugszeichenliste:

- 10: Vorwärmvorrichtung
- 12: Glasscherbengemenge
- 14: Bunker
- 14a: Trichterförmiger Abschnitt
- 14b: Bodenwanne
- 16: obere Öffnung
- 20: Seitenwandung
- 22: Bodenwandung
- 24: Seitenwandung
- 26: Austragsschnecke
- 26a: Stirnseite
- 26b: Stirnseite
- 28: Längsausnehmung
- 30a: Förderschnecke
- 30b: Förderschnecke
- 32a: Förderkanal
- 32b: Förderkanal
- 34: Öffnung
- 36: Trichter
- 38: Einlegemaschine
- 40: Doghouse

## Patentansprüche

1. Vorrichtung zum Vorwärmen eines vorzugsweise mit Rohstoffen zur Glasherstellung angereicherten Glasscherbengemenges (12) mit einem vorzugsweise Strömungskanäle zum Durchleiten von warmem (Ab-)Gas aufweisenden Bunker (14), **dadurch gekennzeichnet, dass** die Vorrichtung zur Austragung des vorgewärmten Glasscherbengemenge aus dem Bunker über eine ein oder mehrere Austragsschnecken (26) verfügt, mit der das Glasscherbengemenge mindestens einer Ausflussöffnung (28) im Bodenbereich des Bunkers (14) zuförderbar ist.

2. Vorrichtung gemäß Anspruch 1, **dadurch gekennzeichnet, dass** die Austragsschnecken (26) oberhalb der Bodenwandung (22) des Bunkers (14) angeordnet sind, wobei die mindestens eine Ausflussöffnung (28) vorzugsweise in der Bodenwandung (22) des Bunkers (14) angeordnet ist.

3. Vorrichtung gemäß Anspruch 2, **dadurch gekennzeichnet, dass** die Austragsschnecken (26) im Wesentlichen die gesamte Bodenwandung (22) des Bunkers (14) überdecken, sodass im Wesentlichen das gesamte, im Bodenbereich befindliche Glasscherbengemenge (12) der mindestens einen Ausflussöffnung (28) zuförderbar ist.

4. Vorrichtung gemäß Anspruch 2 oder 3, **dadurch gekennzeichnet, dass** unterhalb der in der Bodenwandung (22) angeordneten Ausflussöffnung (28) mindestens eine weitere, winklig, insbesondere senkrecht zu den oberhalb der Bodenwandung (22) des Bunkers (14) angeordneten Austragsschnecken (26) wirkende Förderschnecke (30a, 30b) angeordnet ist.

5. Vorrichtung gemäß Anspruch 4, **dadurch gekennzeichnet, dass** das Glasscherbengemenge (12) mit der mindestens einen, unterhalb der Bodenwandung (22) des Bunkers (14) angeordneten Förderschnecke (30a, 30b) einem insbesondere im Bereich deren Stirnseite unterhalb derselben angeordneten, schräg oder senkrecht nach unten verlaufenden Förderkanal (32a, 32b) zuförderbar ist.

6. Vorrichtung gemäß Anspruch 5, **dadurch gekennzeichnet, dass** der Förderkanal (32a, 32b) in den Bereich einer Einlegemaschine (38) zum Zufördern des Glasscherbengemenges (12) zu einem Doghouse (40) einer Brennerwanne mündet, insbesondere einer U-Flammenwanne.

7. Vorrichtung gemäß Anspruch 6, **dadurch gekennzeichnet, dass** der Förderkanal (32a, 32b) oberhalb einer oberen Trichteröffnung (34) ein Trichters (36) der Einlegemaschine (38) mündet oder innerhalb derselben.
